# EUROPEAN PATENT APPLICATION

(11) **EP 1 244 246 A1**
(43) Date of publication of application: **25.09.2002**
(21) Application number: 01302478.1
(22) Date of filing: 19.03.2001
(51) Int. Cl.: H04L 7/04

(54) **Adjustment of the sampling clock phase in receivers**

(71) Applicant: LUCENT TECHNOLOGIES INC., Murray Hill, New Jersey 07974-0636 (US)
(72) Inventor: Dohmen, Ralf, Nürnberg (DE); Haunstein, Herberg, 91077 Dormitz (DE); Mayer, Peter, Weiher, 91080 Uttenreuth (DE); Roell, Georg, 92353 Postbauer-Heng (DE); Sticht, Konrad, 92676 Eschenbach (DE)
(74) Representative: Sarup, David Alexander

(57) **Abstract**

The invention relates to the adjusting of the sampling clock phase in receivers. An object of the invention is to adjust the sampling clock phase of receivers, especially in a long distance transmission system for high bit rate over optical fibers, in an improved and preferably fast way. The invention presupposes a receiver having a data and clock recovery circuitry and error corrections means (FEC) for sampling a data stream having blocks with error controlled coded data. According to the invention, conditional bit error rates are derived from the number of corrected bits in the data block. In dependence on the conditional bit error rates the sampling clock phase for data decision is shifted to sample at an earlier point or to sample at a later point.

## Description

The invention relates to a method of adjusting the sampling clock phase of a receiver and to a receiver adapted to carrying out the adjusting method.

In fiber optical transmission systems, in particular in long distance transmission systems at high bit rates, the tolerable optical signal-to-noise ratio (OSNR) is reduced by linear and non linear distortions, such as group velocity dispersion (GFD), polarization mode dispersion (PMD), transmitter chirp, extinction ratio and/or fiber nonlinearity which may introduce inter-symbol interference (ISI) leading to reduced eye opening in a respective receiver.

The data stream transmitted may include a forward error correction code (FEC) which allows to improve the bit error rate (BER) for a given signal-to-noise ratio (SNR) by reducing stochastic distortions from optical or electrical noise and cross talk. Different FEC-Coding-Schemes are used, such as so called in band or out band, BCH (Bose-Chaudhury-Hoequengheen) or RS (Reed-Solomon) codes which fit for Sonet/SDH digital wrapper formats. If the input error rate of the data stream is below the error correction capability of the respective error correction code, the bit errors can be corrected and estimates of a bit error ratio (BER) may be measured by using the additional information from the respective FEC-decoding scheme.

At the receiver the optical signal is converted into an incoming analog signal and the digital data as well as the sampling clock phase has to be derived out therefrom by means of a data and clock recovery circuitry. Usually, the sampling phase for the data regeneration is derived from the incoming signal by using a phase lock loop (PLL) containing a phase detector (PD), a loop filter (LF) and a voltage controlled oscillator (VCO) for the generation of the sampling clock.

For such data regeneration, one critical assumption is the perfect match of a data decision threshold and a phase detector threshold for the data path and the sampling clock.

Monitoring the eye pattern at the receiver, the eye openings of nearly undistorted signals exhibit long periods of ones and zero levels, where the sampling time or point is not pattern dependent and therefore not critical. However, because of circuit mismatch, parasitic effects and signal distortions the eye openings are reduced and the optimum sampling phase may be missed. In particular in long distance transmission systems the optical noise introduced by optical amplification, such as amplified spontaneous emission (ASE), decreases the optical signal-to-noise ratio limiting the maximum distance of ones and zero levels. Consequently the decision threshold has to be set correctly, not to waste performance. Additionally, the sampling phase has to be set to the optimum value, too. If, however, a BER-measurement alone seeks for control of the optimum sampling time, it suffers degradation due to a dither process necessary for estimation of the sign of the control signal.

Therefore, the invention seeks to adjust the sampling clock phase of a receiver for data regeneration, especially in a long distance transmission system for high bit rate, in an improved and preferably fast way, even in the event of occurring signal distortions.

The inventive solution is defined in the independent claims.

A receiver is presupposed having a data and clock recovery circuitry and an error correction means. In such receiver, the data stream is error control coded. According to the invention conditional bit error rates are derived from the number of corrected bits in the data block and the sampling clock phase for data decision is shifted to sample at an earlier point or to sample at a later point in dependence on the conditional bit error rates.

Accordingly, the inventive methodology uses the information about a sampling clock phase deviation carried in value transitions caused by combinations of bits. That is, based on the monitoring of the received eye diagram, a distorted signal causes pattern dependent deviations in the transitions from ones to zeros and vice versa. Thus, for a given signal-to-noise-ratio the direction for shifting the sampling clock phase can be derived from the conditional error probabilities. Moreover, due to sign information given by the conditional error rates a very fast adaptation of the sampling clock phase is guaranteed, because no dithering algorithm is needed.

According to a preferred refinement, the conditional error rates are estimated by counting the corrected bits dependent on the respective proceeding and succeeding bit.

Preferably, a first number of corrected bits is defined by counting each corrected bit being both equal to the respective previous bit and different to the respective following bit and a second number of corrected bits is defined by counting each corrected bit being both equal to the respective following bit and different to the respective previous bit. Subsequently, based on a comparison of the two numbers of corrected bits, the sampling phase is shifted to a later point when the first number of corrected bits is less than the second number of corrected bits whereas the sampling phase is shifted to an earlier point when the second number of corrected bits is less than the first number of corrected bits.

The amount of shifting the sampling phase is advantageously dependent on the ratios between the conditional bit error rates.

The invention is particularly applicable in a receiver, wherein the error correction means comprise counters for corrected 0's and 1's in the kind of a look-up table based on conditional error probabilities and means for providing a control signal indicating the direction and/or the amount for shifting the sampling clock phase.

A feedback loop is formed between the error correction means and the data and clock recovery circuitry with preferably two independent tunable delay buffer means therebetween, wherein one if which is coupled to the path of the data decision means and the other is coupled to the path of the phase detection means of the data and clock recovery circuitry.

By using digital processing means for providing the error corrections means the benefits therefrom can be used also for the analog data and clock recovery circuitry. Advantageously, the receiver comprises storage means, such as an integrator to store the actual sampling clock phase as long as no errors are detected.

Subsequently, the invention is exemplary described based on a preferred refinement and with regard to the accompanied drawings, in which
- Fig. 1: is a scheme of an optical transmission channel,

- Fig. 2: depicts an undistorted eye diagram,
- Fig. 3: is a schematic diagram of a receiver having a data clock recovery circuitry using an error correction means feedback loop according to the invention,
- Fig. 4: depicts a distorted eye diagram,
- Fig. 5: is a graph of the conditional distribution of the bit values for different signal transitions, and
- Fig. 6: is a possible detail of feedback loop according to Fig. 3 providing a sampling clock phase control signal.

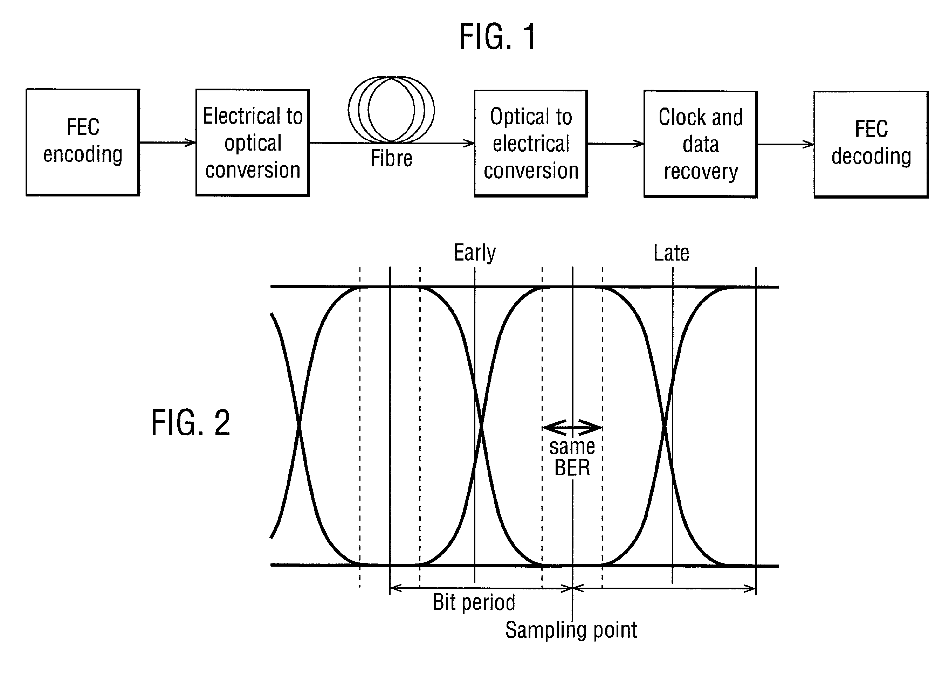

At first reference is made to Fig. 1 showing components of an optical transmission channel. The transmitter includes an encoder for forward error correction FEC and an electrical-to-optical converter which supplies the data stream through optical fibers to an optical-to-electrical converter in the receiver. The electrical incoming signal appear as analog signals and an analog-to digital conversion of sampled signals has to be performed. Therefore, a clock and data recovery circuitry is provided for deriving out of the analog signals the sampling clock phase and the digital data. The converted digital data are fed to an FEC decoder for error correction.

Fig. 2 shows the eye pattern for a nearly undistorted incoming signal across the time as the abscissa. As can be seen therefrom, the eye pattern exhibits long periods of low signal amplitudes and high signal amplitudes, i.e. zero and one levels, providing an interval between respective two bit periods for sampling the signal without reducing the bit-error rate. Thus, with the assumption of a perfect match of the data decision threshold for the data path and the phase decision threshold for the sampling clock, the sampling point is, in substantial, not pattern dependent and therefore not critical. Usually, however, signal distortions lead to reduced eye openings.

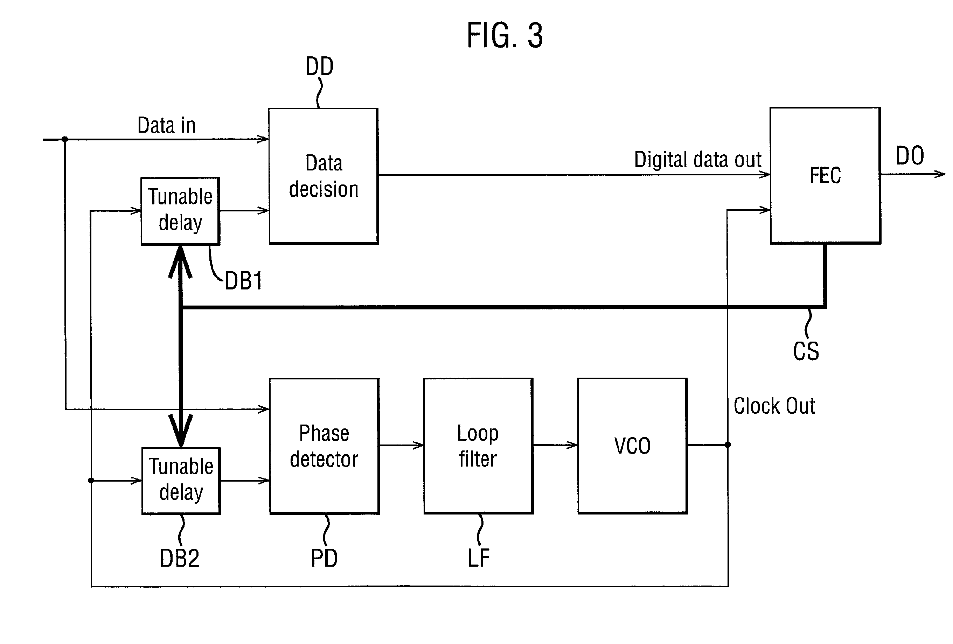

Fig. 3 schematically shows a detail of an inventive receiver providing a control signal CS carrying information for the adjustment of sampling phase when signal distortions occur. The optical-to-electrical converted data stream passes through data decisions means DD to sample the signal and to convert the sampled signal into digital data, as known. For the data regeneration also the sampling clock phase, i.e. the correct phase in sampling the incoming analog signal to digital output data has to be derived from the incoming analog signal. Thus, the analog data stream is passed through a phase lock loop including a phase detector PD, a loop filter LF and a voltage controlled oscillator VCO. The digital data and the recovered clock is then fed to error correction means FEC correcting detected errors to provide a digital output data DO for further processing. Accordingly, to error correction means FEC is provided by an digital, preferably full custom application specific integrated circuit (ASIC).

However, the digital circuit FEC is not only correcting the data from the data decision means DD and providing corrected output data DO but also performs a measurement of estimates of conditional bit error rates out of the analog high speed circuitry for data and clock recovery by using the number of corrected bits. Based on the conditional bit error rates of respective bit sequences, information about a sampling phase deviation present on the currently received signal or eye pattern can be obtained for generating a sampling clock phase control signal CS.

A feedback loop between the FEC means and the data and clock recovery circuitry is provided to adjust the sampling clock phase when signal distortions occur by means of the control signal CS based on known error corrections.

The control signal CS is fed to two independent tunable delay buffers DB1 and DB2 to shift the sampling clock phase for the data decision DD in both directions. In order to shift the sampling point earlier, the delay for the clock at the phase detector PD has to be increased and the delay at the data decision DD has to be decreased. Accordingly, to shift the sampling point later the delay for the clock at the data decision DD has to be increased and the delay at the phase detector PD has to be decreased.

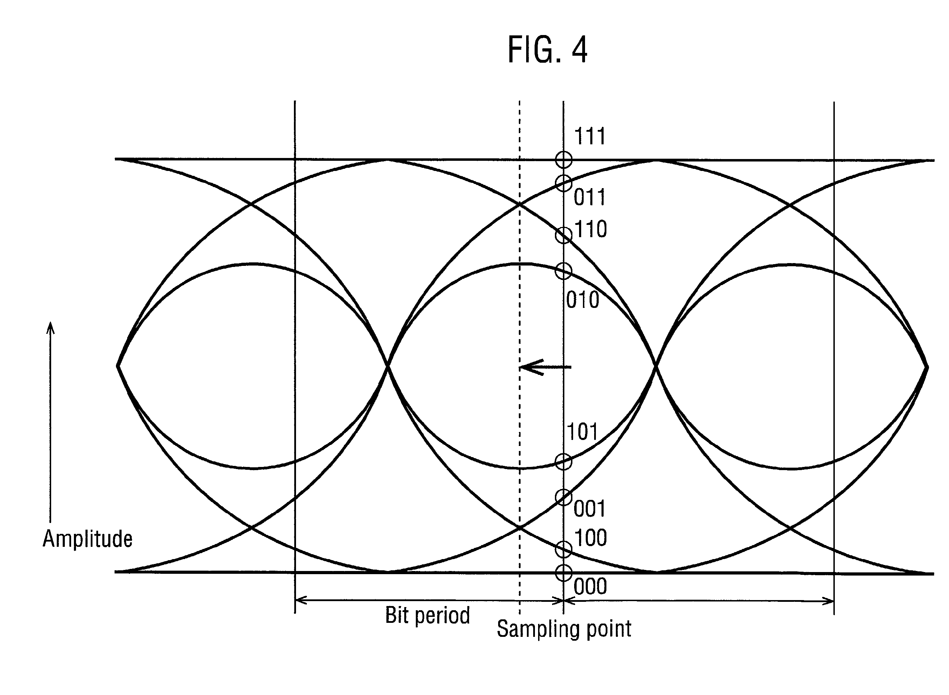

Fig. 4 depicts an eye diagram having in comparison to the eye diagram of Fig. 2 a distorted pattern due to signal distortions occurred during optical transmission. As can be seen from Fig. 4, the eye pattern exhibits reduced openings between the zero and one levels, providing decreased intervals between respective two bit periods for sampling the signal without reducing the bit-error rate. However, the occurring of transitions caused by combinations of adjacent, i.e. proceeding and succeeding sampled bits like 100, 001, 101, 010, 110 or, 011 or 110 carry information about the sampling phase deviation present on the currently received pattern, i.e. about the actual behavior of the transmission channel.

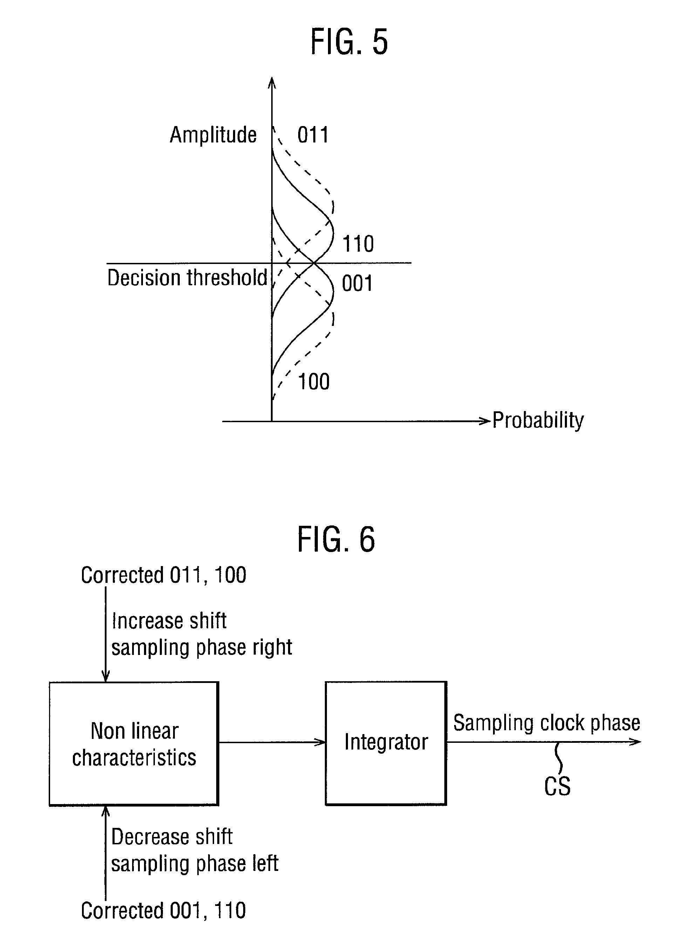

Fig. 5 shows a distribution of bit errors with regard to the sampling point of Fig. 4 across the conditional probability based on the respective preceding and succeeding bits. The graph 011 represents a preceding bitₙ₋₁ value of 0, an incorrect received or corrected bitₙ value of 1 and a succeeding bitₙ₊₁ value of 1. Accordingly the graph 110 represents a respective bitₙ₋₁, bitₙ and bitₙ₊₁ of 1, 1 or 0, the graph 001 a respective bitₙ₋₁, bitₙ and bitₙ₊₁ values of 0, 0 or 1 and the graph 100 represents values of 1, 0 and 0. Thus, each of the graphs represents a conditional bit error rate including values of detected incorrect 0's and 1's dependent on the respective proceeding and succeeding bits. In general, if all errors can be detected and corrected the number of corrected bits corresponds to the bit-error-rate.

A line indicates the optimal decision threshold were the probability of occurring the conditional bit error rates 100 and 011 is equal and also the probability of occurring the conditional bit error rates 001 and 110 is equal. Based on that optimal decision threshold and considering the corresponding incorrect transitions according to the distort eye pattern of Fig. 4 the overall bit-error-rate can be improved by shifting the sampling clock phase in a direction which can be derived from the conditional error probabilities' for a given signal-to-noise ratio. To decrease the bit-error-rate, the sampling time has to be shifted to an earlier point if more transitions of 001 and 110 than transitions of 100 and 011 are corrected. That is, for widening the openings in the eye pattern according to Fig. 4, the sampling point have to be shift to the left hand side if there are more corrected bitsₙ which are equal to the respective previous bitₙ₋₁ and different to the respective subsequent bitₙ₊₁ and vice versa.

The counting of the number of incorrect received and from the error correction means FEC corrected transitions 001, 110 as well as the number of corrected bit transitions 011 and 100 can easily be done by the FEC-means by the provision of a shift register having tap means to present the bits of the data stream for the purpose of analysis using a look-up table. With regard to a bitₙ detected as being incorrect by the FEC at a currently adjusted sampling point, the tap means of the digital circuit is used to tap the respective bits from the bit stream, that is the previous bitₙ₋₁, the corrected bitₙ and the subsequent bitₙ₊₁ is delivered to counters for being further processed. The previous bitₙ₋₁ can have the values 0 or 1 and this is also through for the bitₙ and the bitₙ₊₁.

If more corrected transitions 001, 110 are summed up than corrected transitions 011, 100, the currently adjusted sampling point is too late, i.e. the delay DB2 for the clock at the phase detector PD has to be increased and/or the delay DB1 for the data decision DD has to be decreased. If however the number of corrected transitions 001, 110 are less than the number of corrected transitions 011, 100 the sampling point has to be shifted to the right, i.e. to a later time.

This sign information guarantees a fast adaptation, because no different algorithm is needed. The digital control provides a flexible realization of sampling clock phase control to both direction, whereby the adaptation speed can be controlled by the detected conditional bit-error-rates using non-linear characteristics as can be seen in Fig. 6. For example, large shifting steps can be adjusted at high error rates and smaller shifting steps at minor error rates. The output of the linear characteristics preferably is fed to an integrator is for storing the current sampling phase as long as no errors are detected. At the output of the integrator the sampling clock phase control signal CS is provided for feeding back to the analog high speed circuitry.

Due to the generation of the feedback control signal CS by the digital circuitry for error correction FEC, the analog high speed clock and data recovery circuit can benefit from the digital signal processing. Without the need for an additional high speed circuitry the sampling clock phase control loop allows fine tuning of the overall performance by adding the two separate tunable delay buffers DB1 and DB2.

It should be obvious, that the coding gain has to provide sufficient margin, so that there is no significant performance loss of the data traffic. Usually, however, the input BER has sufficient range to provide fast measurement, such as 10⁻⁸...10⁻⁴ at a rate of more than 10Gbps, while the output BER remains a critical range (<10⁻¹⁶), assumed the error correction is able to provide this performance.

## Claims

1. A method of adjusting the sampling clock phase in a receiver, comprising
a data and clock recovery circuitry,
an error correction means (FEC),
the method including the steps of
receiving a data stream having data blocks with an information section and an error correction section,
estimating conditional bit-error-rates at the output of the data and clock recovery circuitry using the number of corrected bits in the data blocks,
shifting the sampling clock phase to sample the data stream at an earlier point or at an later point in dependence on the conditional bit error rates.

2. Method of claim 1, wherein each of the conditional bit error rates is estimated by taken into consideration the history of occurring of the bits preceding and following a respective corrected bit.

3. Method of claim 1 or 2, comprising the steps of
defining a first number of corrected bits by
counting each corrected bit being both equal to the respective previous bit and different to the respective following bit,
defining a second number of corrected bits by
counting each corrected bit being both equal to the respective following bit and different to the respective previous bit,
shifting the sampling phase to an earlier point when the first number of corrected bits is more than the second number of corrected bits, and
shifting the sampling phase to a later point when the first number of corrected bits is less than the second number corrected bits.

4. Method of claim 1, 2 or 3, comprising the step of adjusting the amount of shifting in dependence on the occurring of conditional bit error rates.

5. Method of any of claims 1 to 4, comprising the step of storing the sampling phase as long as no errors are corrected.

6. Method of any of claims 1 to 5, wherein the incoming data stream is converted from optical to digital form and subdivided into block which are processed for error correction.

7. Method of any of claims 1 to 6, wherein a delay (DB1) for data decision (DD) is increased and/or a delay (DB2) for phase decision (PD) is decreased for sampling the data stream at a later point and the delay (DB1) for data decision (DD) is decreased and/or the delay (DB2) for phase decision (PD) is increased for sampling the data stream at an earlier point.

8. A receiver adapted to adjust the sampling clock phase thereof, comprising
a data and clock recovery circuitry,
an error correction means (FEC),
**characterised in that**
the error correction means (FEC) comprises means for estimating conditional bit error rates and for generating a sampling clock phase control signal (CS) based on the estimated conditional bit error rates,
the data and clock recovery circuitry is coupled at its incoming side with delay buffer means (DB1, DB2), wherein a feedback loop for the control signal (CS) is provided between the error correction means (FEC) and the delay buffer means (DB1, DB2).

9. Receiver of claim 8, comprising two independent tuneable delay buffer means (DB1, DB2), of which one (DB1) is coupled to the path for data recovery and the other (DB2) is coupled to the path for clock recovery.

10. Receiver of claim 8 or 9, wherein the error corrections means comprises a shift register having tap means to present corrected bits and the bits preceding and following a respective corrected bit.

11. Receiver of claim 8, 9 or 10, wherein the error correction means (FEC) comprise counters for corrected 0's and 1's dependent on the respective preceding and succeeding bits in the kind of a look-up table and means for providing a control signal (CS) indicating the direction and/or the amount for shifting the sampling clock phase based on the counters.

12. Receiver of any of claims 8 to 10, wherein the error corrections means (FEC) comprises storage means for storing an actual sampling phase.
